**Europäisches Patentamt**

**European Patent Office**

**Office européen des brevets**

(19)

(11) Numéro de publication: **0 193 421**
**B1**

(12) # FASCICULE DE BREVET EUROPÉEN

(45) Date de publication du fascicule du brevet:
04.01.89

(51) Int. Cl.⁴: **G 01 D 5/244**

(21) Numéro de dépôt: **86400112.8**

(22) Date de dépôt: **21.01.86**

(54) Transducteur capacité-fréquence notamment pour capteurs capacitifs.

(30) Priorité: **22.02.85 FR 8500831**

(43) Date de publication de la demande:
**03.09.86 Bulletin 86/36**

(45) Mention de la délivrance du brevet:
**04.01.89 Bulletin 89/1**

(84) Etats contractants désignés:
**DE GB IT NL SE**

(56) Documents cité:
**DE-B-1 807 038**
**US-E-30 183**

(73) Titulaire: **REGIE NATIONALE DES USINES RENAULT, Boîte postale 103 8-10 avenue Emile Zola, F-92109 Boulogne- Billancourt (FR)**

(72) Inventeur: **Warenghem, Michel, 8, avenue de l'Abbé St.Pierre, F-92150 Suresnes (FR)**
Inventeur: **Brisset, Pierre, 68, rue Jean Pierre Timbaud, F-75011 Paris (FR)**

(74) Mandataire: **Saint Martin, René, Régie Nationale des Usines Renault Direction des Recherches et Développements Service 0604 8-10, Avenue Emile- Zola, F-92109 Boulogne Billancourt Cedex (FR)**

LIBER, STOCKHOLM 1989

## Description

La présente invention se rapporte à un transducteur c'est-à-dire un circuit générateur d'un signal représentatif d'une capacité, délivrée notamment par un capteur capacitif (voir par exemple US-E-30 183).

L'invention propose un circuit convertissant les grandeurs physiques délivrées par un capteur du type capacitif en variations de fréquences tout en resolvant le problème technique que posent les capacités parasites qui perturbent ces mesures physiques. Ces capacités parasites sont essentiellement dues aux circuits de traitement des données capacitives provenant du capteur d'une part et à la position du capteur lui-même par rapport à certains potentiels - celui du boîtier par exemple - d'autre part. Ces capacités parasites ont pour conséquence de diminuer la sensibilité du capteur et d'en modifier la courbe de réponse. Pour obtenir une information juste malgré ce parasitage, il est intéressant de convertir les variations de capacités détectées par le capteur en variations de fréquence. Or les circuits actuels convertissants les capacités en fréquences nécessitent généralement un positionnement proche du capteur de façon à minimiser l'influence des capacités parasites. Dans d'éventuelles applications à l'automobile, un tel capteur capacitif peut se trouver au niveau du moteur et subir de fortes températures, ce qui peut être préjudiciable au circuit électronique de traitement associé au capteur.

La présente invention a pour but de pallier ces inconvénients pour permettre la détection des variations d'une grandeur physique au moyen d'un capteur capacitif à sortie en fréquences tout en s'affranchissant des capacités parasites, ce qui permet en particulier d'éloigner le circuit de traitement des données délivrées par le capteur du lieu de variation de la grandeur physique considérée.

Ainsi, l'objet de la présente invention est un transducteur capacité - fréquence utilisant un oscillateur commandé par une tension variable, notamment pour capteur capacitif, caractérisé en ce qu'il comporte:

- un oscillateur commandé par une tension continue V, délivrant un signal $S_1$ rectangulaire périodique, de durée t et de période $T_1$ variable en fonction de la dite tension V, représentatif d'une première capacité $C_0$ variable;
- un premier circuit de charge et de décharge d'une seconde capacité $C_2$ variable égale à la somme de la première capacité $C_0$ variable et d'une première capacité $C_1$ fixe, ce circuit étant connecté à la sortie de l'oscillateur et délivrant un signal rectangulaire périodique $S_2$, de durée $T_2$ fonction de la seconde capacité $C_2$ variable et de la période $T_1$;
- un second circuit de charge et de décharge d'une seconde capacité $C_3$ fixe connecté en parallèle sur le premier circuit de charge et de décharge en sortie de l'oscillateur et délivrant un signal $S_3$ rectangulaire périodique, de durée $T_3$ fonction de la seconde capacité $C_3$ fixe et de période $T_1$;
- des moyens de traitement des signaux $S_2$ et $S_3$ délivrés par lesdites deux circuits de charge et de décharge, lesdits moyens étant connectés en sortie desdits deux circuits de charge et de décharge et délivrant ladite tension V continue variable destinée à commander l'oscillateur.

D'autres caractéristiques et avantages de l'invention apparaîtront dans la description qui suit, illustrée par les différentes figures qui représentent:

- les figures 1a et 1b: un schéma de principe d'un transducteur selon l'invention et les diagrammes des signaux associés;
- les figures 2a, 2b et 3a, 3b deux variantes d'un premier mode de réalisation du transducteur selon l'invention et les diagrammes des signaux associés;
- les figures 4a et 4b un second mode de réalisation du transducteur et les diagrammes des signaux associés;
- les figures 5a et 5b: une application du transducteur à une sonde de mesure de niveau de liquide.
- la figure 6 des courbes de réponse d'un capteur de pression capacitif.

Les éléments assurant les mêmes fonctions en vue des mêmes résultats sont référencés identiquement dans les différentes figures.

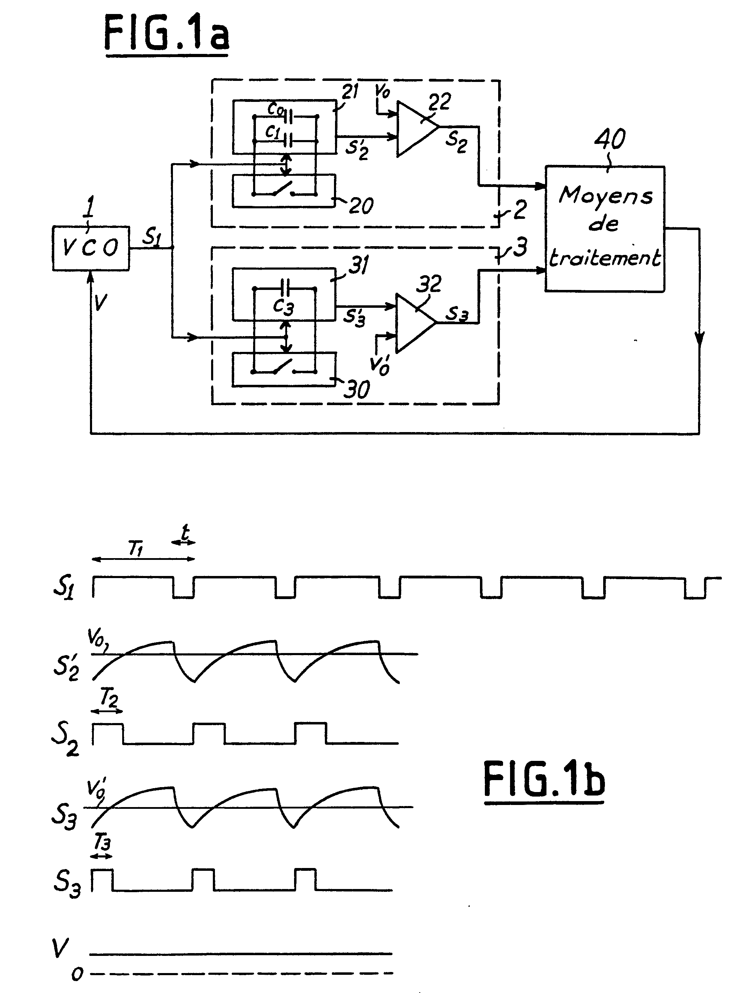

Selon un premier mode de réalisation représenté sur la figure 1a, le transducteur d'un signal représentatif d'une capacité délivrée par un capteur du type capacitif comporte un circuit oscillateur 1 contrôlé par une tension, - voltage controlled oscillator V.C.O. en vocable anglo-saxon -, recevant en entrée un signal continu de tension V dont les variations sont traduites en variations de fréquences en sortie de l'oscillateur. Les signaux issus des différents éléments du transducteur sont représentés sur la figure 1b. Cet oscillateur 1 est conçu pour délivrer un signal rectangulaire périodique $S_1$ variant en fonction de la tension V appliquée en entrée. C'est précisément ce signal $S_1$ qui est représentatif de la capacité $C_0$ variable délivrée par le capteur capacitif comme l'explique ce qui suit.

Le transducteur, selon l'invention, comporte de plus deux circuits 2 et 3 de charge et de décharge de capacité, montés en parallèle en sortie de l'oscillateur 1. Le premier circuit 2 est destiné à assurer la charge et la décharge d'une capacité $C_2$ variable égale à la somme de la capacité variable $C_0$ issue du capteur capacitif associé au transducteur et d'une capacité fixe $C_1$. Ce circuit de charge et de décharge 2 de la capacité $C_2$ comporte par exemple d'une part un circuit 21 passe-bas du premier ordre du type RC, constitué d'une résistance fixe $R_2$ et de la capacité $C_2$, associé à un interrupteur 20 recevant le signal $S_1$ et commandant respectivement la charge de

capacité $C_2$ pendant le temps $T_1$ - t et la décharge pendant le temps t, et d'autre part un comparateur de seuil 22.

Le comparateur de seuil 22 reçoit en entrée d'une part le signal $S'_2$ issu du circuit RC 21 et d'autre part un signal continu de tension de seuil $V_0$ déterminée, et délivre en sortie un signal $S_2$ rectangulaire périodique, de durée $T_2$, fonction de la constante de temps $R_2 C_2$ du circuit 21, et de période $T_1$.

Le second circuit 3 est destiné à assurer la charge et la décharge d'une capacité $C_3$. Il est composé par exemple d'une part d'un circuit 31 passe-bas du premier ordre du type RC, constitué d'une résistance fixe $R_3$ et de la capacité $C_3$, associé à un interrupteur 30 recevant le signal $S_1$ et commandant respectivement la charge de la capacité $C_3$ pendant le temps $T_2$ - t et la décharge pendant le temps t, et d'autre part d'un comparateur de seuil 32 fonctionnant comme le circuit 22. Ce second circuit de charge et de décharge 3 délivre un signal $S_3$ rectangulaire périodique, de durée $T_3$ fonction de la constante de $R_3 C_3$ du circuit et de période $T_1$.

Le transducteur comporte enfin des moyens de traitement 40 des signaux $S_2$ et $S_3$, connectés en sortie des deux circuits de charge et de décharge 2 et 3, délivrant un signal continu de tension V variable destiné à commander l'oscillateur 1. Cette tension V est fonction de la capacité $C_0$ variable délivrée par le capteur capacitif et par conséquent la fréquence du signal de sortie de l'oscillateur est aussi représentative de $C_0$. Lorsque l'oscillateur 1 est un V.C.O. linéaire, c'est-à-dire délivrant un signal de fréquence proportionnelle à la tension qui lui est appliquée, le signal de tension V est particulièrement intéressant. Le circuit selon l'invention génère bien soit un signal significatif par son niveau de tension continue, soit un signal significatif par sa fréquence représentative des variations de capacités données par un capteur physique.

Les moyens de traitement 40 permettent de maintenir la période $T_1$ proportionnelle à la différence $(T_2 - T_3)$. La période $T_1$ sera donc de la forme $[K_2 (C_0 + C_1) - K_3 C_3]$, $K_2$ et $K_3$ étant respectivement fonction de $R_2$, $V_0$ et de $R_3$, $V'_0$. Dans l'application particulière d'élimination des capacités parasites, il suffira de rendre identiques les termes $K_2 C_1$ et $K_3 C_3$ par ajustement de $K_2$ et de $K_3$, c'est donc la différence entre $T_2$ et $T_3$ qui permet d'annuler les effets dus aux capacités parasites du système. La transformation temps-tension se fera par calcul de la valeur moyenne du signal résultant de la différence $(T_2 - T_3)$, cette valeur moyenne étant du type $K_4 \frac{T_2 - T_3}{T_1}$, $K_4$ étant fonction de $K_2$, $K_3$ et de l'amplitude des signaux. Si cette moyenne est maintenue constante, la période $T_1$ sera bien égale à la différence $(T_2 - T_3)$ à un coefficient multiplicatif près. On peut ainsi par exemple relié le capteur au circuit de traitement par un câble blindé dont on aurait préalablement mesuré les capacités parasites pour s'en affranchir. Un moyen simple consiste à utiliser un câble blindé avec deux conducteurs actifs plus le blindage dont l'un serait relié à $C_2$ et l'autre à $C_3$. Dans ce cas les effets de variations en température des capacités parasites du câble blindé sont aussi éliminés.

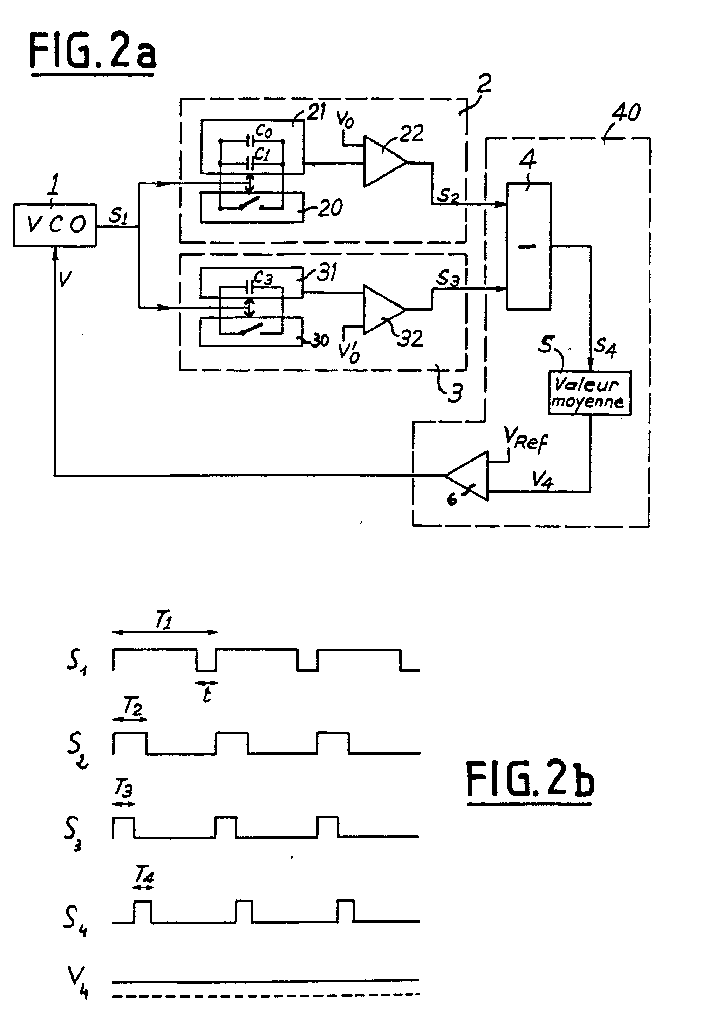

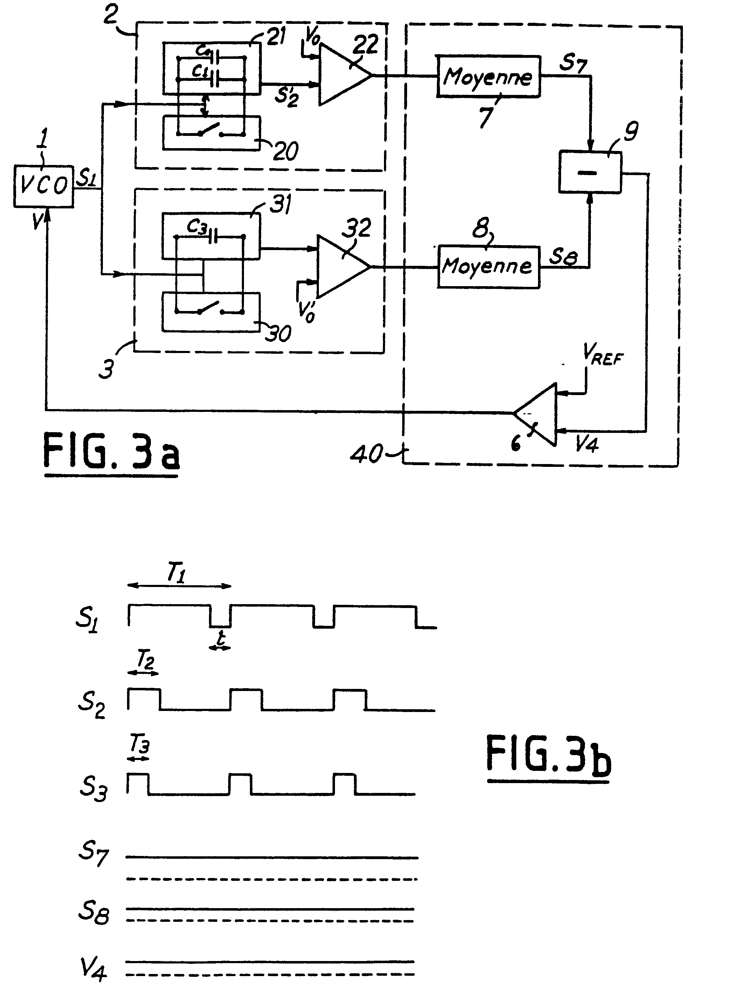

Les figures 2a, 2b et 3a, 3b montrent deux variantes de réalisation des moyens de traitement 40 des signaux $S_2$ et $S_3$. Sur la figure 2a, ces moyens sont constitués tout d'abord par des moyens 4 effectuant la différence logique entre les signaux rectangulaires $S_2$ et $S_3$, c'est-à-dire délivrant un signal $S_4$ rectangulaire, de même période $T_1$ que les précédents mais dont la durée $T_4$ est égale à la différence entre les durées $T_2$ et $T_3$ des signaux $S_2$ et $S_3$. Ces moyens 4 sont par exemple une porte logique. Les moyens 40 sont constitués ensuite par des moyens 5 d'obtention d'un signal continu de tension $V_4$ représentant la valeur moyenne du signal rectangulaire $S_4$ - ces moyens 5 pouvant être un filtre passe-bas par exemple -. Le signal continu de tension $V_4$ est ensuite maintenu, grâce à des moyens 6, du type comparateur - intégrateur par exemple, à une tension constante $V_{REF}$ et la tension V, issue de ces moyens 6, varie en fonction de la différence $T_2$ - $T_3$, cette tension étant destinée à piloter le V.C.O 1. Les differents signaux sont dessinés sur la figure 2b.

Sur la figure 3a, les moyens 40 de traitement des signaux $S_2$ et $S_3$ sont constitués tout d'abord par des moyens 7 et 8 d'obtention de la valeur moyenne des signaux $S_2$ et $S_3$ respectivement - ces moyens pouvant être des filtres passe-bas par exemple - chacun délivrant un signal continu $S_7$ et $S_8$ de tensions $V_7$ et $V_8$ respectivement. Les moyens 40 sont constitués ensuite par des moyens 9 de calcul de la différence analogique de ces deux signaux continus $S_7$ et $S_8$, cette différence étant représentée par un signal continu de tension $V_4$. Comme précédemment cette tension $V_4$ est maintenue égale à une tension fixe de référence $V_{REF}$ par les moyens 6, la tension V qui est issue commandant l'oscillateur 1. La figure 3b représente les signaux des différents éléments du circuit.

Cette seconde variante est particulièrement intéressante dans le cas où les temps $T_2$ et $T_3$ sont identiques au début des mesures faites par le capteur. Dans la première variante (figure 2a), la différence logique entre les signaux $S_2$ et $S_3$ réalisée par les moyens 4 ne sera jamais nulle en raison des différences entre les temps de montée, de descente et de propagation des signaux $S_2$ et $S_3$ respectivement. Par contre, la deuxième variante (figure 3a) permet, dans le cas où $T_2 = T_3$, d'avoir une valeur moyenne analogique $S_7$ et $S_8$ pour les signaux $S_2$ et $S_3$ respectivement dépendant peu des temps de montée, de descente et de propagation, de sorte que la tension $V_4$ est quasiment nulle.

On constate que l'effet de la capacité parasite due à un éloignement entre le capteur et le transducteur est annulé par différence entre les constantes de temps $T_2$ et $T_3$.

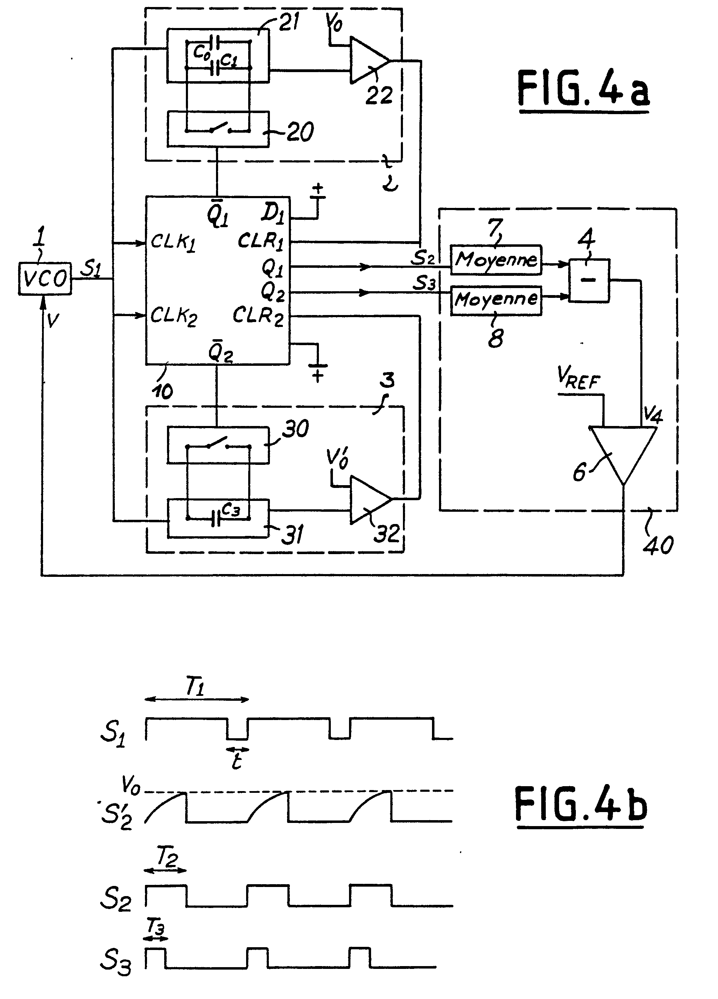

La figure 4a représente un second mode de réalisation du transducteur selon l'invention, pour des applications plus particulières à des capteurs capacitifs dont les variations de capacités en fonction d'une grandeur physique à mesurer présentent une grande dynamique. En effet, pour les capteurs détectant les valeurs de capacités variant entre quelques picofarads et quelques centaines de nanofarads se pose le problème du temps de décharge des capacités: plus la valeur de la capacité est grande, plus son temps de décharge est long, or si on fixe un temps de décharge t invariable comme pour les deux modes de réalisation, ce temps risque d'être trop petit pour décharger les fortes capacités ou trop grand pour les faibles capacités dont le fonctionnement a lieu généralement à des fréquences élevées donc pendant des temps très courts. Pour résoudre ce problème, le transducteur, objet de la figure 4a, asservit le temps t nécessaire à la décharge de chaque capacité à la valeur du temps de charge différentiel.

Comme précédemment, le transducteur comporte un oscillateur V.C.O. 1 connecté en sortie à deux circuits 2 et 3 de charge de capacité, montés en parallèle et reliés en sortie à des moyens 40 de traitement des signaux issus de deux circuits de charge, mais il comporte de plus une double bascule D 10.

Chaque bascule D élémentaire comporte une entrée D alimentée sous une tension de 5 Volts, une entrée d'horloge CLK recevant des tops d'horloge, une sortie $Q$ délivrant l'information figurant sur D à chaque front d'horloge par exemple, une sortie inverse $\bar{Q}$ délivrant l'information inverse de la précédente et une entrée de remise à zéro CLR de l'information délivrée en $Q$. Dans le transducteur selon l'invention pour la bascule associée au circuit de charge 2 par exemple, l'entrée horloge CLK 1 reçoit le signal $S_1$ issu de l'oscillateur 1, l'entrée CLR1 est connectée à la sortie du circuit de charge 2, la sortie $\bar{Q}_1$ est reliée à l'interrupteur 20 et la sortie $Q_1$ est connectée aux moyens 40 de calcul de la valeur moyenne. Au premier top d'horloge CLK1, l'interrupteur 20 étant ouvert au départ, la capacité $C_2$ se charge et atteint le seuil $V_0$, le comparateur 22 déclenche alors la remise à zéro de la sortie $Q_1$, par l'intermédiaire de la borne CLR1, entraînant l'apparition d'un niveau haut sur la sortie $\bar{Q}_1$, qui commande alors la fermeture de l'interrupteur permettant la décharge de la capacité $C_2$.

Au second top d'horloge, la capacité se charge à nouveau et le processus reprend. Ainsi, des que la capacité $C_2$ présente une tension à ses bornes égale au seuil $V_0$ fixé, sa décharge est provoquée et a lieu pendant un temps égal à $(T_1 - T_2)$ (figure 4b). Lorsque la capacité $C_2$ augmente, son temps de décharge aussi puisqu'il s'adapte à sa valeur. Un tel dispositif permet de passer d'une fréquence de 2 MHz à une fréquence de 1 KHz pour une variation de capacité de 10 pF à 40 nF, tout en tenant compte des capacités parasites non négligeables pour les valeurs minimales.

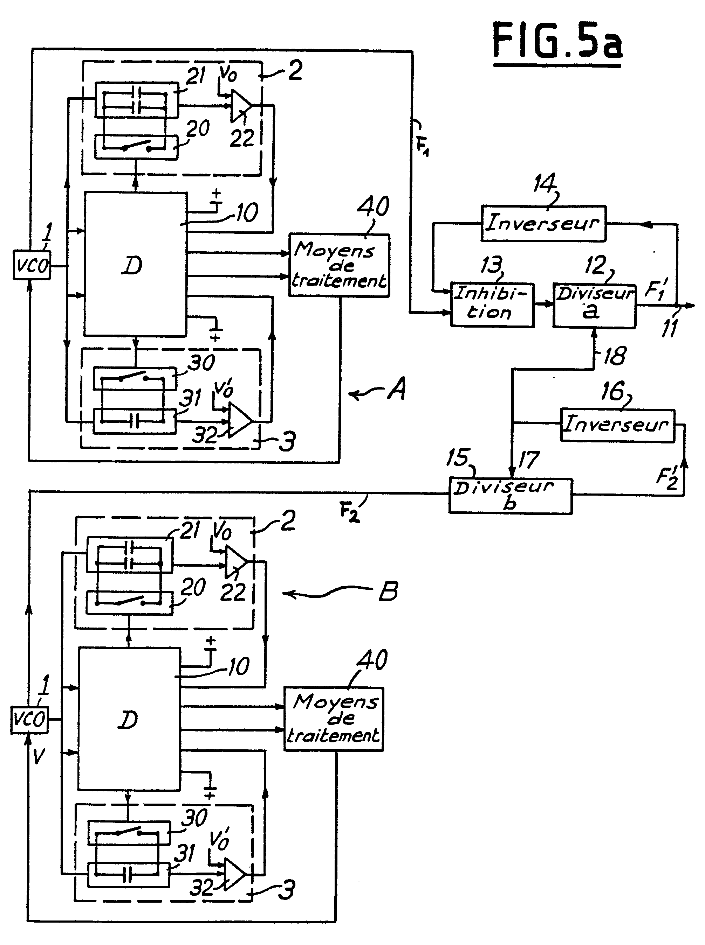

La figure 5a représente un mode de réalisation d'un transducteur selon l'invention particulièrement adaptée à une application à une sonde de mesure de niveau de liquide dans un réservoir, décrite notamment dans le brevet français déposé au nom de la Demanderesse sous le numero 83.12775. Dans cette sonde le niveau de liquide est obtenu par comparaison entre la valeur d'une capacité de référence et la valeur de la capacité de mesure de niveau. L'objet de la figure 5a concerne un circuit qui délivre les deux informations de fréquences représentatives des variations de la capacité égale à la somme de la capacité de référence et de la capacité de mesure de niveau par rapport à cette même capacité sans présence de liquide d'une part et des variations de la capacité de mesure de niveau par rapport à cette même capacité sans présence de liquide d'autre part, sur une même borne de sortie. Les circuits A et B sont identiques à celui de la figure 4a car les deux capacités $C_2$ et $C_3$ présentes sur chacun d'eux sont égales au départ et que les capacités correspondant aux liquides possibles à mesurer peuvent varier dans un rapport de 2 à 100 soit de quelques picofarads à quelques nanofarads. Ce dispositif comporte un premier circuit diviseur 12 connecté à la sortie de l'oscillateur 1 délivrant le signal $F_1$ dont la fréquence est la plus élevée, par l'intermédiaire d'un circuit d'inhibition 13. La sortie du diviseur 12 est de plus rebouclée sur l'entrée à travers un inverseur 14. La sortie de l'oscillateur 1, délivrant le signal $F_2$ de fréquence plus basse, est reliée à l'entrée d'un circuit diviseur 15 dont le signal de sortie $F_2$, inversé à travers un circuit inverseur 16, est appliqué à la fois sur la borne 17 de remise à zéro de ce diviseur 15 et sur la borne 18 de remise à zéro du premier diviseur 12. Les ordres a et b de division de deux diviseurs 12 et 15 respectivement sont égaux à plusieurs centaines avec a inférieur ou égal à b.

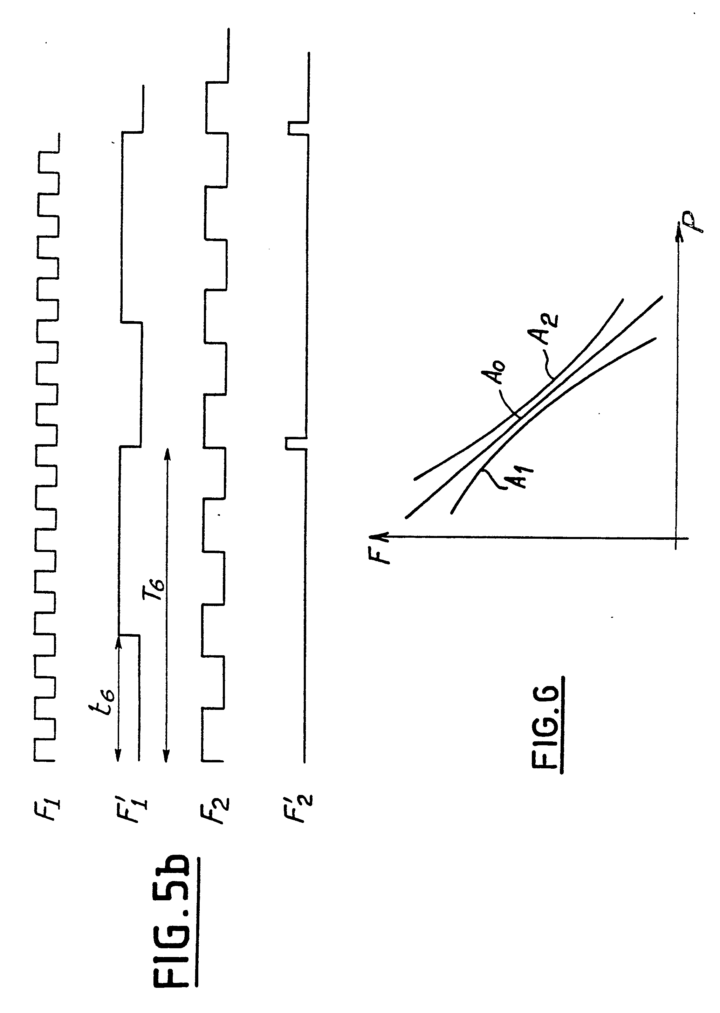

Le fonctionnement du dispositif est le suivant, $F_1$ et $F_2$ étant les signaux rectangulaires issus des oscillateurs 1 des deux circuits A et B respectifs et $F'_1$ et $F'_2$ les signaux en sortie des diviseurs 12 et 15 respectifs. La fréquence du signal $F_1$, est divisée par a (a = 3 sur la figure 5b) de sorte que pendant les a premières périodes, le signal $F'_1$ reste à 0 puis passe à 1. En sortie de l'inverseur 14 le signal passe alors de 1 à 0 inhibant l'entrée du diviseur 12. Pendant ce temps, la fréquence du signal $F_2$ est divisée par b (b = a = 3 dans le cas de la figure 5b). Etant donnée que la sortie du diviseur 15 est inversée avant d'être reliée à la borne de remise à zéro 17 de ce diviseur 15, dès que le signal $F'_2$ issu du diviseur 15 passe de 0 à 1, il repasse aussitôt après à 0. Cependant, ce signal $F'_2$ inversé remet à zéro également la sortie du diviseur 12 de sorte que le signal $F'_1$ qui se trouvait alors à l'état 1 repasse à l'état 0 et l'entrée du diviseur 12 autorise à nouveau l'entrée du signal $F_1$ dans le diviseur. Ainsi, sur la sortie 11 du dispositif, apparaît un signal rectangulaire de période $T_6$ proportionnelle à la somme de la capacité de référence et de la capacité de niveau et de durée $t_6$ proportionnelle à la capacité de niveau.

Dans les différents modes de réalisation qui ont été décrits, seul intervient le temps de charge des capacités contrairement aux circuits intégrés monostables existant actuellement, qui font intervenir en plus une partie du temps de décharge. De plus, les capacités ont toutes un point commun qui est la masse, ce qui facilite le blindage du capteur et le montage sur un véhicule automobile.

Pour une utilisation du transducteur en oscillateur différentiel, lorsque les deux capacités des circuits de charge sont liées à la grandeur physique à mesurer, il est très intéressant de commander la remise à zéro des capacités par celle donnant le temps le plus élevé. Les tensions aux bornes des capacités évoluant dans le même sens, les capacités parasites différentielles se trouvent minimiser.

Un autre avantage de l'invention est celui du réglage de zéro et de pente sur la période de sortie de l'oscillateur permettant la normalisation d'un lot de capteurs par simple action sur le transducteur selon l'invention.

Enfin les systèmes décrits s'adaptent bien aux capteurs de pression capacitif où la pression est une fonction quasi linéaire de l'inverse de la capacité de mesure. La fréquence obtenue est de la forme $\frac{1}{K(T_2 - T_3)}$ pour les circuits décrits précédemment. Dans le cas d'un capteur de pression capacitif, les variations de $T_2$ ou $T_3$ permettent de modifier la sensibilité et de modifier la linéarité de la courbe $F = f$ (pression). La figure 6 représente cette courbe, dans trois cas différents: $A_1$ correspondant à une valeur de la capacité réelle du capteur telle que la courbe présente quelques valeurs inférieures à la courbe linéaire idéale $A_0$; $A_2$ correspondant à une autre valeur de la capacité réelle du capteur telle que la courbe présente des valeurs supérieures à cette droite $A_0$; $A_0$ correspondant à la courbe idéale obtenue en ajoutant ou en retouchant aux deux valeurs de capacité du capteur une capacité fixe.

## Revendications

1. Transducteur capacité-fréquence utilisant un oscillateur (1) commandé par une tension (V) variable, notamment pour un capteur capacitif, caractérisé en ce qu'il comporte:
 - un oscillateur (1) commandé par une tension continue (V), délivrant un signal $(S_1)$ rectangulaire périodique, de durée t et de période $T_1$ variable en fonction de ladite tension (V), représentatif d'une première capacité $(C_0)$ variable;
 - un premier circuit (2) de charge et de décharge d'une seconde capacité $(C_2)$ variable égale à la somme de la première capacité $(C_0)$ variable et d'une première capacité $(C_1)$ fixe, ce circuit (2) étant connecté à la sortie de l'oscillateur (1) et délivrant un signal rectangulaire périodique $(S_2)$, de durée $T_2$ fonction de la seconde capacité $(C_2)$ variable et de période $T_1$;
 - un second circuit (3) de charge et de décharge d'une seconde capacité $(C_3)$ fixe, connecté en parallèle sur le premier circuit (2) de charge et de décharge en sortie de l'oscillateur (1) et délivrant un signal $(S_3)$ rectangulaire périodique, de durée $T_3$ fonction de la seconde capacité $(C_3)$ fixe et de période $T_1$;
 - des moyens de traitement (40) des signaux $(S_2$ et $S_3)$ délivrés par lesdits deux circuits de charge et de décharge (2 et 3) lesdits moyens (40) étant connectés en sortie desdits deux circuits de charge et de décharge (2 et 3) et délivrant ladite tension (V) continue variable destinée à commander l'oscillateur (1).

2. Transducteur selon la revendication 1, caractérisé en ce que les moyens (40) de traitement des signaux $(S_2$ et $S_3)$ comportent des moyens (4) effectuant la différence logique de ces signaux et connectés en sortie à des moyens de calcul (5) de la valeur moyenne du signal représentant le rapport cyclique desdits signaux $(S_2$ et $S_3)$.

3. Transducteur selon la revendication 1, caractérisé en ce que les moyens (40) de traitement des signaux $(S_2$ et $S_3)$ comportent des moyens (7 et 8) de calcul de la valeur moyenne de chacun des signaux respectivement $(S_2$ et $S_3)$, connectés en sortie à des moyens (9) effectuant la différence de ces valeurs moyennes.

4. Transducteur selon la revendication 1, caractérisé en ce que les circuits de charge et de décharge (2 et 3) sont constitués chacun par un circuit RC (21; 31) comportant une résistance fixe et une capacité $(C_2; C_3)$ associé à un interrupteur (20; 30) commandant la charge et la décharge des capacités $(C_2; C_3)$ et par un comparateur de seuil (22; 32) destiné à comparer la tension aux bornes des capacités à une tension de seuil $(V_0;$ $V'_0)$.

5. Transducteur selon la revendication 4, caractérisé en ce que l'interrupteur (20; 30) reçoit le signal $(S_1)$ de l'oscillateur (1) et commande la charge de la capacité $(C_2; C_3)$ pendant un temps égal à $T_1-t$ et sa décharge pendant le temps t.

6. Transducteur selon l'une des revendications 1 à 4, caractérisé en ce qu'il comporte de plus une double bascule (10) recevant sur ses deux entrées d'horloge (CLK1 et CLK2) le signal $(S_1)$ issu de l'oscillateur (1), sur ses deux bornes de remise à zéro (CLR1 et CLR2) les signaux issus respectivement des circuits de charge et décharge (2 et 3) et connectée sur ses sorties $(\bar{Q}_1$ et $\bar{Q}_2)$ aux interrupteurs (20 et 30) de sorte que les capacités se déchargent pendant un temps qui est asserti à la valeur du temps de décharge différentiel.

7. Transducteur, caractérisé en ce qu'il comporte deux circuits transducteurs (A et B) selon l'une des revendications 1 à 6, associés à un dispositif destiné à transmettre les signaux $(F_1$ et $F_2)$ issus des deux oscillateurs (1) des circuits (A et B) respectivement sur une même borne de sortie (11) et comportant:
- un premier circuit diviseur (12) connecté à la sortie de l'oscillateur (1) délivrant le signal (F$_1$) dont la fréquence est la plus basse, par l'intermédiaire d'un circuit d'inhibition (13), la sortie du diviseur (12) étant de plus rebouclée sur l'entrée dudit circuit d'inhibition (13) à travers un circuit inverseur (14);
- un second circuit diviseur (15) connecté à l'entrée de l'oscillateur (1) délivrant le signal (F$_2$), sa sortie étant connectée, par l'intermédiaire d'un circuit inverseur (16), à la fois à la borne (17) de remise à zéro de ce diviseur (15) et à la borne (18) de remise à zéro du premier diviseur (12);
- les ordres de division a et b des deux diviseurs respectifs (12 et 15) étant tels que a soit inférieur ou égal à b.

**Patentansprüche**

1. Kapazititäts-Frequenzumformer, der einen durch eine variable Spannung (V) gesteuerten Oszillator (1) aufweist, insbesondere für kapazitive Aufnehmer, dadurch gekennzeichnet, daß er folgende Teile aufweist:
- einen Oszillator (1), der durch eine Gleichspannung (V) gesteuert ist und ein rechtwinkliges periodisches Signal (S$_1$) abgibt, dessen Dauer t und Periode T$_1$ als Funktion der Spannung (V) variabel sind und eine erste variable Kapazität (C$_0$) darstellt;
- einen ersten Lade- und Entladekreis (2) einer zweiten variablen Kapazität (C$_2$), die gleich der Summe der ersten variablen Kapazität (C$_0$) und einer ersten festen Kapazität (C$_1$) ist, wobei der Kreis (2) mit dem Ausgang des Oszillators (1) verbunden ist und ein periodisches rechtwinkliges Signal (S$_2$) abgibt, dessen Dauer (T$_2$) eine Funktion der zweiten variablen Kapazität (C$_2$) und der Periode T$_1$ ist;
- einen zweiten Lade- und Entladekreis (3) für eine zweite feste Kapazität (C$_3$), der parallel zum ersten Lade- und Entladekreis (2) zum Ausgang des Oszillators (1) geschaltet ist und ein periodisches rechtwinkliges Signal (S$_3$) abgibt, dessen Dauer (T$_3$) eine Funktion der zweiten festen Kapazität (C$_3$) und der Periode T$_1$ ist;
- eine Verarbeitungsanordnung (40) für die Signale (S$_2$ und S$_3$), die von den Lade- und Entladekreisen (2 und 3) stammen, wobei die Anordnung (40) mit den Ausgängen dieser beiden Lade- und Entladekreise (2, 3) verbunden ist und die variable Gleichspannung (V) abgibt zur Steuerung des Oszillators (1).

2. Umformer nach Anspruch 1, dadurch gekennzeichnet, daß die Verarbeitungsanordnung (40) für die Signale (S$_2$ und S$_3$) eine Anordnung (4) aufweist, die den logischen Unterschied dieser Signale feststellt und mit dem Ausgang einer Rechenanordnung (5) für den Mittelwert des Signals verbunden ist, das das zyklische Verhältnis der Signale (S$_2$ und S$_3$)

darstellt.

3. Umformer nach Anspruch 1, dadurch gekennzeichnet, daß die Verarbeitungsanordnung (40) für die Signale (S$_2$ und S$_3$) eine Rechenanordnung (7 und 8) aufweist für den Mittelwert eines jeden der Signale (S$_2$ bzw. S$_3$), die mit dem Ausgang einer Anordnung (9) zur Ermittlung der Differenz dieser Mittelwerte verbunden ist.

4. Umformer nach Anspruch 1, dadurch gekennzeichnet, daß die Lade- und Entladekreise (2 und 3) jeweils aus einem RC-Kreis (21, 31) bestehen, die jeweils einen festen Widerstand aufweisen sowie eine Kapazität (C$_2$, C$_3$) und mit einem Schalter (20, 30) verbunden sind, der das Laden und Entladen der Kapazitäten (C$_2$, C$_3$) steuert und einen Schwellwertvergleicher (22, 32) aufweisen zum Vergleichen der Spannung an den Anschlüsse der Kapazitäten mit einer Schwellspannung (V$_0$, V'$_0$).

5. Umformer nach Anspruch 4, dadurch gekennzeichnet, daß der Schalter (20, 30) das Signal (S$_1$) des Oszillators (1) erhält und das Laden der Kapazität (C$_2$, C$_3$) während einer Zeit steuert, die gleich dem Wert T$_1$-t ist und das Entladen während der Zeit t.

6. Umformer nach einem der Ansprüche 1 bis 4, dadurch gekennzeichnet, daß er einen doppelten Flipflop (10) aufweist, an dessen beiden Uhreingängen (CLK1 und CLK2) das Signal (S$_1$) vom Oszillator (1) anliegt, an dessen beiden Rückstelleingängen auf Null (CLR1 und CLR2) die Signale anliegen, die vom Lade- bzw. Entladekreis (2, 3) stammen und dessen Ausgänge (Q̄$_1$ und Q̄$_2$) mit den Schaltern (20 und 30) derart verbunden sind, daß die Kapazitäten sich während einer Zeit entladen, die vom differentiellen Wert der Entladezeit abhängen.

7. Umformer, dadurch gekennzeichnet, daß er zwei Umformkreise (A und B) nach einem der Ansprüche 1 bis 6 aufweist und einer Anordnung zugeordnet ist zur Übertragung von Signalen (F$_1$ und F$_2$), die von zwei Oszillatoren (1) der Schaltkreise (A und B) stammen, auf einen einzigen Ausgang (11) und wobei vorgesehen ist:
- ein erster Teilerkreis (12), der mit dem Ausgang des Oszillators (1) verbunden ist, der das Signal (F$_1$) liefert mit niedriger Frequenz mittels eines Sperrkreises (13), wobei der Ausgang des Teilers (12) mit dem Eingang des Sperrkreises (13) über einen Inverterkreis (14) rückgekoppelt ist;
- einen zweiten Teilerkreis (14), der mit dem Eingang des Oszillators (1) verbunden ist, der das Signal (F$_2$) liefert, wobei sein Ausgang mittels eines Inverterkreises (16) gleichzeitig mit dem Rückstellanschluß (17) auf Null dieses Teilers (15) verbunden ist und dem Rückstellanschluß (18) auf Null des ersten Teilers (12);
- wobei die Teilungsfaktoren a und b der beiden Teiler (12, 15) derart sind, daß a kleiner oder gleich b ist.

## Claims

1. Capacitance/frequency transducer employing an oscillator (1) controlled by a variable voltage (V), particularly for a capacitive sensor characterised in that it comprises:

- an oscillator (1) operated by a direct current voltage (V) supplying a periodic rectangular signal $(S_1)$ of duration t and of period $T_1$ variable as a function of the said voltage (V), representing a first variable capacitance $(C_0)$;

- a first circuit (2) for charging and discharging a second variable capacitance $(C_2)$ equal to the sum of the first variable capacitance $(C_0)$ and of a first fixed capacitance $(C_1)$, the said circuit (2) being connected to the output of the oscillator (1) and supplying a periodic rectangular system $(S_2)$ of duration $T_2$ as a function of the second variable capacitance $(C_2)$ and of period $T_1$;

- a second circuit (3) for charging and discharging a second fixed capacitance $(C_3)$ connected in parallel to the first charging and discharging circuit (2) at the output of the oscillator (1) and supplying a periodic rectangular signal $(S_3)$ of duration $T_3$ as a function of the second fixed capacitance $(C_3)$ and of period $T_1$;

- means (40) of processing the signals $(S_2$ and $S_3)$ supplied by the said charging and discharging circuits (2 and 3), the said means (40) being connected to the output of the said two charging and discharging circuits (2 and 3) and supplying the said variable direct current voltage (V) which is adapted to operate the oscillator (1).

2. Transducer according to Claim 1, characterised in that the means (40) of processing signals $(S_2$ and $S_3)$ comprise means (4) for making the logical difference between these signals and connected on the output side to means (5) of calculating the mean value of the signal representing the cyclic ratio of the said signals $(S_2$ and $S_3)$.

3. Transducer according to Claim 1, characterised in that the means (40) of processing signals $(S_2$ and $S_3)$ comprise means (7 and 8) of calculating the mean value of each of the signals $(S_2$ and $S_3)$ respectively connected at the output to means (9) for establishing the difference between these mean values.

4. Transducer according to Claim 1, characterised in that the charging and discharging circuits (2 and 3) are each constituted by a circuit RC (21; 31) comprising a fixed resistance and a capacitance $(C_2; C_3)$ associated with a make-and-break switch (20; 30) controlling the charging and discharging of the capacitances $(C_2; C_3)$ and by a threshold comparator (22; 32) adapted to compare the voltage at the terminals of the capacitances with a threshold voltage $(V_0; V'_0)$.

5. Transducer according to Claim 4, characterised in that the make-and-break switch (20; 30) receives the signal $(S_1)$ from the oscillator (1) and operates the charging of the capacitance $(C_2; C_3)$ for a time equal to $T_1$-t and its discharging for the time t.

6. Transducer according to one of Claims 1 to 4, characterised in that it comprises in addition a double flip-flop (10) receiving at its two clock inputs (CLK1 and CLK2) the signal $(S_1)$ from the oscillator (1) on its two zeroing terminals (CLR1 and CLR2) the signals emanating respectively from the charging and discharging circuits (2 and 3) and connected at its outputs $(\bar{Q}_1$ and $\bar{Q}_2)$ to the make-and-break switches (20 and 30) so that the capacitances discharge for a time which is subject to the value of the differential discharge time.

7. Transducer characterised in that it comprises two transducer circuits (A and B) according to one of Claims 1 to 6, associated with a device intended to transmit the signals $(F_1$ and $F_2)$ emanating from two oscillators (1) of circuits (A and B) respectively over one and the same output terminal (11) and comprising:

- a first divider circuit (12) connected to the output of the oscillator (1) furnishing the signal $(F_1)$ of which the frequency is lowest, through an inhibitor circuit (13), the output of the divider (12) being in addition looped back to the input of the said inhibitor circuit (13) through an inverter circuit (14);

-a second divider circuit (15) connected to the input of the oscillator (1) supplying the signal $(F_2)$, its output being connected through an inverter circuit (16) both to the terminal (17) for zeroing this divider (15) and to the terminal (18) for zeroing the first divider (12); the orders a and b to divide the two respective dividers (12 and 15) being such that a is less than or equal to b.

# FIG.1a

# FIG.1b

# FIG.2a

# FIG.2b

FIG. 3a

FIG. 3b

5

FIG.4a

FIG.4b

# FIG.5a

**FIG.5b**

$F_1$

$F_1'$

$t_6$

$T_6$

$F_2$

$F_2'$

**FIG.6**

$F$

$A_0$

$A_1$

$A_2$

$P$